(19) Europäisches Patentamt / European Patent Office / Office européen des brevets

(11) EP 2 454 295 B1

(12) **FASCICULE DE BREVET EUROPEEN**

(45) Date de publication et mention de la délivrance du brevet:
**12.11.2014 Bulletin 2014/46**

(21) Numéro de dépôt: **10730485.9**

(22) Date de dépôt: **13.07.2010**

(51) Int Cl.:
***C08F 216/14*** (2006.01) ***C08F 228/02*** (2006.01)
***C08J 5/22*** (2006.01) ***H01M 8/10*** (2006.01)

(86) Numéro de dépôt international:
**PCT/EP2010/060065**

(87) Numéro de publication internationale:
**WO 2011/006894 (20.01.2011 Gazette 2011/03)**

(54) **COPOLYMERES FLUORES, MEMBRANES PREPAREES A PARTIR DE CEUX-CI ET DISPOSITIF DE PILE A COMBUSTIBLE COMPRENANT CES MEMBRANES**

FLUORIERTE COPOLYMERE, DARAUS HERGESTELLTE MEMBRANEN UND BRENNSTOFFZELLENELEMENT MIT DIESEN MEMBRANEN

FLUORINATED COPOLYMERS, MEMBRANES PREPARED USING THE LATTER AND FUEL CELL DEVICE INCLUDING SAID MEMBRANES

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **15.07.2009 FR 0954889**

(43) Date de publication de la demande:
**23.05.2012 Bulletin 2012/21**

(73) Titulaires:
- **Commissariat à l'Énergie Atomique et aux Énergies Alternatives 75015 Paris (FR)**
- **Centre National de la Recherche Scientifique 75016 Paris (FR)**

(72) Inventeurs:
- **SOULES, Aurélien F-34310 Capestang (FR)**
- **AMEDURI, Bruno F-34000 Montpellier (FR)**
- **BOUTEVIN, Bernard F-34090 Montpellier (FR)**
- **GALIANO, Hervé 37700 La Ville aux Dames France (FR)**

(74) Mandataire: **Ilgart, Jean-Christophe et al BREVALEX 95, rue d'Amsterdam 75378 Paris Cedex 8 (FR)**

(56) Documents cités:
**BE-A1- 793 078** **US-A- 4 189 540**
**US-A- 5 798 417**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 454 295 B1

## Description

### DOMAINE TECHNIQUE

La présente invention a trait à des copolymères fluorés originaux comprenant, entre autres, des motifs perfluorés et leur procédé de préparation.

Ces copolymères, présentant d'excellentes capacités physico-chimiques, en particulier, des capacités d'échange ionique élevées, trouvent, en particulier, leur application dans la préparation de membranes échangeuses d'ions, destinées aux piles à combustible.

Ainsi, les copolymères de l'invention peuvent trouver leur application dans la conception de membranes échangeuses d'ions destinées aux piles à combustible, en particulier de piles à combustible ayant une membrane comme électrolyte telles que les piles PEMFC (signifiant « Proton Exchange Membrane Fuel Cell » pour « Pile à combustible à membrane échangeuse de protons ») et DMFC (signifiant « Direct Methanol Fuel Cell » pour « Pile à combustible directe au méthanol »).

### ÉTAT DE LA TECHNIQUE ANTÉRIEURE

Une pile à combustible comporte, classiquement, un empilement de cellules élémentaires, au sein desquelles a lieu une réaction électrochimique entre deux réactifs qui sont introduits de manière continue. Le combustible, tel que l'hydrogène, pour les piles fonctionnant avec des mélanges hydrogène/oxygène (PEMFC) ou le méthanol pour des piles fonctionnant avec des mélanges méthanol/oxygène (DMFC), est amené au contact de l'anode, alors que le comburant, généralement l'oxygène, est amené au contact de la cathode. L'anode et la cathode sont séparées par un électrolyte, de type membrane échangeuse d'ions. La réaction électrochimique, dont l'énergie est convertie en énergie électrique, se scinde en deux demi-réactions :

- une oxydation du combustible, se déroulant à l'interface anode/électrolyte produisant, dans le cas des piles à hydrogène des protons $H^+$, qui vont traverser l'électrolyte en direction de la cathode, et des électrons, qui rejoignent le circuit extérieur, afin de concourir à la production d'énergie électrique ;
- une réduction du comburant, se déroulant à l'interface électrolyte/cathode, avec production d'eau, dans le cas des piles à hydrogène.

La réaction électrochimique a lieu au niveau d'un assemblage électrode-membrane-électrode.

L'assemblage électrode-membrane-électrode est un assemblage très mince d'une épaisseur de l'ordre du millimètre et chaque électrode est alimentée par les gaz combustible et comburant par exemple à l'aide d'une plaque cannelée, dite plaque bipolaire.

La membrane conductrice ionique est généralement une membrane organique comprenant des groupes ioniques qui, en présence d'eau, permettent la conduction des protons produits à l'anode par oxydation de l'hydrogène.

Les membranes commerciales les plus utilisées à l'heure actuelle sont les membranes commercialisées sous les marques Nafion®, Flemion®, 3M®, Fumion® et Hyflon Ion® produites à l'échelle industrielle.

En dépit des hautes valeurs de conductivité atteintes (par exemple, jusqu'à 100 mS/cm), les membranes susmentionnées présentent les inconvénients majeurs suivants :

- elles sont perméables aux alcools, en particulier au méthanol, ce qui les rend incompatibles avec une utilisation dans des piles DMFC ;
- elles ne peuvent être utilisées dans des conditions sèches, ce qui empêche leur utilisation à des températures supérieures à 85°C ;
- elles présentent un coût élevé.

Les inventeurs se sont proposés de développer de nouveaux copolymères susceptibles d'être utilisés pour constituer des membranes de pile à combustible, lesquels sont susceptibles de présenter une bonne conductivité protonique compatible avec l'utilisation susmentionnée, qui présentent un caractère hydrophobe empêchant, lorsqu'ils sont mis sous forme de membrane, une diffusion d'eau ou des solvants alcooliques à travers ceux-ci et qui présentent une stabilité thermique et une inertie chimique.

EXPOSÉ DE L'INVENTION

Ainsi, l'invention a trait à des copolymères fluorés comprenant au moins un motif répétitif de formule (I) suivante :

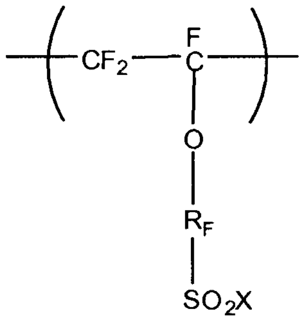

(I)

et au moins un motif répétitif de formule (II) suivante :

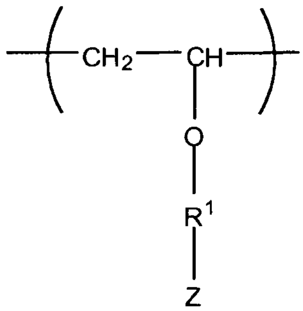

(II)

dans desquelles :

- $R_F$ représente une chaîne perfluorocarbonée comprenant éventuellement un ou plusieurs atomes d'oxygène ;
- X représente un atome d'halogène ou un groupe OR avec R représentant un atome d'hydrogène ou un cation (tel que Na, K) ;
- $R^1$ représente une chaîne hydrocarbonée ou une chaîne perfluorocarbonée ;
- Z représente une chaîne perfluorocarbonée.

Avant d'entrer plus en détail dans la description, nous proposons les définitions suivantes.

Par chaîne hydrocarbonée, on entend, classiquement, dans ce qui précède et ce qui suit, un groupe comprenant à la fois des atomes de carbone et des atomes d'hydrogène. Par exemple, il peut s'agir d'un groupe alkylène comprenant de 1 à 10 atomes de carbone, tel qu'un groupe éthylène $-CH_2-CH_2-$, notamment pour le groupe $R^1$.

Par chaîne perfluorocarbonée, on entend, classiquement, dans ce qui précède et ce qui suit, un groupe comprenant à la fois des atomes de carbone et des atomes de fluor. Par exemple, il peut s'agir d'un groupe perfluoroalkyle (notamment pour le groupe Z) comprenant de 1 à 12 atomes de carbone, tel qu'un groupe perfluorooctyle. Il peut s'agir, lorsque la chaîne est divalente, c'est-à-dire placée entre deux autres groupes (ce qui est le cas de $R^1$ et $R_F$), d'un groupe perfluoroalkylène, dans lequel peut venir s'intercaler un ou plusieurs atomes d'oxygène, ce qui peut être le cas notamment pour le groupe $R_F$.

Grâce à la présence simultanée au sein des copolymères d'au moins un motif répétitif de formule (I) et au moins un motif répétitif de formule (II), les copolymères de l'invention vont adopter une microstructure originale en ce sens que les groupes latéraux perfluorés hydrophobes vont générer une séparation de phases entre les « clusters » ioniques induits par les groupes sulfonates ou acide sulfonique et eux-mêmes.

Les copolymères de l'invention, grâce à la présence de fluor, sont également stables chimiquement et ne se dégradent pas, notamment lorsqu'ils sont placés dans des conditions acides. Ainsi, en milieu acide, du fait de la présence des groupements $-SO_2X$, tels que définis précédemment, ces copolymères vont pouvoir assurer la circulation de protons entre les différents groupes $-SO_2X$ du copolymère, sans qu'il y ait de dégradation du squelette du copolymère.

Qui plus est, la présence de groupes fluorés confère aux copolymères résultants un caractère hydrophobe rendant ces copolymères peu perméables à l'eau et aux solvants polaires tels que les solvants alcooliques, lorsque ces copolymères sont mis sous forme de membranes.

Selon l'invention, $R_F$ peut être un groupe perfluorocarboné comprenant de 1 à 12 atomes de carbone et

comprenant de 1 à 5 atomes d'oxygène.

Z peut être un groupe perfluocarboné comprenant de 1 à 12 atomes de carbone.

$R^1$ peut être un groupe alkylène comprenant de 1 à 5 atomes de carbone, tel qu'un groupe $-CH_2-CH_2-$.

X peut être un atome de fluor ou un groupe -OH.

Les copolymères de l'invention peuvent comprendre de 25 à 75 % molaire de motif répétitif de formule (I) et de 75 à 25% molaire de motif répétitif de formule (II).

La masse molaire des copolymères de l'invention peut aller de 2000 à 100000 $g.mol^{-1}$.

Les copolymères de l'invention peuvent être des copolymères statistiques ou alternés.

Parmi les copolymères conformes à la présente invention, on peut citer avantageusement les copolymères particuliers suivants :

- le copolymère comprenant comme motif répétitif conforme à la formule (I) un motif répétitif de formule (Ia) suivante :

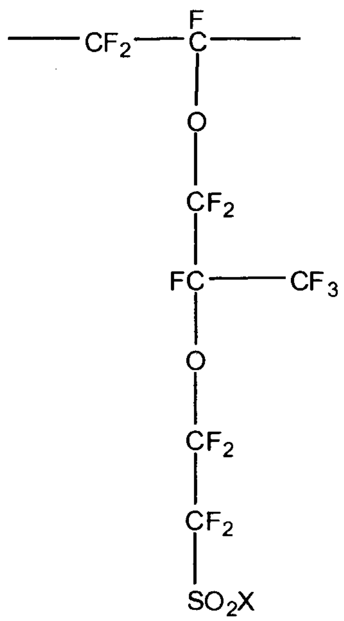

(Ia)

avec X ayant la même définition que celle donnée précédemment et comme motif répétitif conforme à la formule (II) un motif répétitif de formule (IIa) suivante :

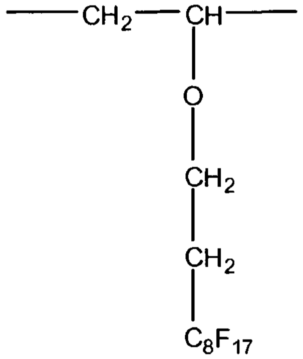

(IIa)

Les copolymères de l'invention peuvent être obtenus par un procédé de préparation, en particulier par un procédé de polymérisation radicalaire comprenant une étape de polymérisation en présence d'un amorceur de radicaux libres d'au moins un monomère de formule (III) suivante :

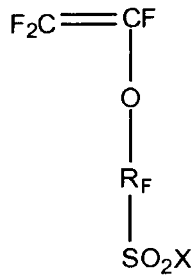

(III)

et d'au moins un monomère de formule (IV) suivante :

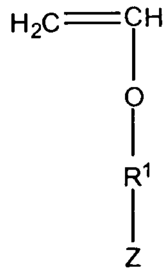

(IV)

les $R_F$, X, Z et $R^1$ étant tels que définis ci-dessus.

Un amorceur de radicaux libres efficace dans le cadre de ce procédé peut être choisi parmi les dérivés peroxypivalates, tels que le peroxypivalate de *tert*-butyle (intitulé TBPPi), des dérivés peroxydes tels que le peroxyde de ditertbutyle, des dérivés sulfates tels que le persulfate de sodium ou d'ammonium.

L'étape de polymérisation s'effectue, de préférence, dans un solvant polaire aprotique, lequel peut être choisi parmi les solvants suivants :

- le diméthylformamide (DMF) ;
- l'acétonitrile ;
- un solvant halogéné tel que le 1,1,2-trifluoro-1,2,2-trichloroéthane, le 1,1,1,3,3-pentafluorobutane ;
- le tétrahydrofurane ;
- l'eau, et
- les mélanges de ceux-ci.

Lorsque X représente un atome d'halogène, le procédé de l'invention peut comporter en outre après l'étape de polymérisation une étape d'hydrolyse acide permettant de transformer les groupes X en fonction OR, R étant tel que défini ci-dessus.

Après l'étape de polymérisation, le procédé de l'invention peut comprendre une étape d'isolement du copolymère du milieu réactionnel, cette étape d'isolement pouvant consister à ajouter au milieu réactionnel un solvant de précipitation, tel que du pentane froid suivi d'une filtration du précipité obtenu.

Les copolymères selon l'invention, comme mentionnés précédemment, ont pour particularité de présenter une bonne stabilité chimique et mécanique notamment à des températures supérieures à 100°C.

De ce fait, la présente invention a également pour objet une membrane comprenant au moins un copolymère tel que décrit ci-dessus.

Les membranes peuvent être préparées de manière classique, par exemple, par coulée, c'est-à-dire que le copolymère est mis en solution dans un solvant adéquat, tel que de l'acétone, puis appliqué sur une surface plane, par exemple une plaque de verre, à l'aide d'un dispositif, tel qu'un applicateur à main.

Le copolymère formant un film humide est ensuite séché pour former un film d'épaisseur adéquate, par exemple de 15 à 150 $\mu$m, puis décollé du substrat.

De telles membranes, notamment lorsque X représente -OH, présentent une capacité d'échange ionique très élevée, supérieure à 1,5 méq.$g^{-1}$. De ce fait, ces membranes peuvent être utilisées notamment pour isoler les compartiments anodiques et cathodiques d'une pile à combustible pouvant fonctionner avec les systèmes suivants :

- hydrogène, alcools, tel que méthanol à l'anode ;
- oxygène, air à la cathode.

De ce fait, la présente invention a également pour objet un dispositif de pile à combustible comprenant au moins une membrane telle que définie ci-dessus.
Pour préparer un tel dispositif, la membrane est placée entre deux électrodes, par exemple, en tissu de carbone, éventuellement platiné, et imprégnées par exemple par du copolymère, selon l'invention. L'ensemble est pressé par chauffage.
Cet ensemble est ensuite inséré entre deux plaques (par exemple, en graphite, appelées plaques bipolaires, qui assurent la distribution des gaz et la conductivité électrique).
L'invention va maintenant être décrite, en référence aux exemples suivants, donnés à titre indicatif et non limitatif.

**EXPOSÉ DÉTAILLÉ DE MODES DE RÉALISATION PARTICULIERS**

Dans les exemples suivants, les réactifs ci-dessous sont utilisés :

- le peroxypivalate de *tert*-butyle (nommé ci-dessous TBPPi) utilisé comme amorceur de radicaux libre a été fourni par Akzo Nobel ;
- l'acétonitrile, le 1,1,1,3,3-pentafluorobutane ont été distillés avant utilisation ;
- le perfluoro(4-méthyl-3,6-dioxaoct-7-ène) fluorure de sulfonyle (PFVES)et l'éther vinylique de 1H, 1H, 2H, 2H-perfluorodécyle (FAVE-8) ont été distillés avant utilisation ;
- le carbonate de lithium $Li_2CO_3$ a été utilisé tel quel.

Les analyses par spectroscopie RMN $^1H$ et RMN $^{19}F$ ont été réalisées avec un spectromètre 400 MHz Bruker avec de l'acétone deutérée comme solvant. Les déplacements chimiques sont définis en ppm par rapport au triméthylsilane (TMS) pour la RMN $^1H$ et $CFCl_3$ pour la RMN $^{19}F$. Les conditions expérimentales pour la RMN $^1H$ (ou la RMN $^{19}F$) sont les suivantes :

- angle de pulse : 90° (ou 30°) ;
- temps d'acquisition : 4,5 s (ou 0,7s) ;
- retard à l'impulsions : 2s (ou 5s) ;
- nombre de scans : 16 (ou 64) ;
- durée d'impulsions pour la RMN $^{19}F$ : 5 $\mu$s.

Les spectres IR par transformée de Fourier ont été réalisés avec un spectromètre de Fourier Nicolet 510P avec une précision de $\pm 2$ $cm^{-1}$ en utilisant un logiciel OMNIC®.
La calorimétrie différentielle à balayage (DSC) a été réalisée sur un appareil Perkins Elmer Pyris 1 connecté à un microordinateur. L'appareil a été étalonné avec de l'indium et du n-octane. Après son insertion dans l'appareil, l'échantillon a été initialement refroidi à -105°C pendant 15 minutes. Ensuite, le premier balayage est effectué à une vitesse de chauffage de 40°C.$min^{-1}$ jusqu'à 80°C, cette température étant maintenue pendant 2 minutes. L'ensemble est ensuite refroidi à -105°C à une vitesse de 320°C.$min^{-1}$ et laissé 10 minutes à cette température avant le second balayage pratiqué à une vitesse de chauffage de 20°C.$min^{-1}$. Enfin, un autre cycle de chauffage est mis en oeuvre et un troisième balayage est réalisé à une température de chauffage de 20°C.$min^{-1}$ pour accéder aux valeurs de températures de transition vitreuse (Tg).
Les analyses thermogravimétriques sont réalisées sur un appareil Texas Instrument TGA 51-133 sous air à vitesse de chauffage de 10°C.$min^{-1}$ de la température ambiante jusqu'à 600°C.

<u>EXEMPLE 1</u>

Cet exemple illustre la préparation de membranes perfluorosulfoniques à partir de la copolymérisation des monomères perfluoro(4-méthyl-3,6-dioxaoct-7-ène) fluorure de sulfonyle (PFVES) avec l'éther vinylique de 1H, 1H, 2H, 2H-perfluorodécyle (FAVE-8).
Lesdits monomères répondent respectivement aux formules suivantes :

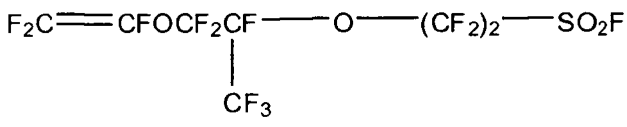

$H_2C{=}CHOC_2H_4C_8F_{17}$

Les monomères susmentionnés sont mis en contact dans un tube de Carius en borosilicate (longueur 130 mm, diamètre interne 10 mm, épaisseur 2,5 mm et volume total de 8 $cm^3$). Il est introduit ensuite l'amorceur peroxypivalate de *tert*-butyle (à une teneur de 1% par rapport à la quantité de monomères) et de l'acétonitrile. Le tube est refroidi avec de l'azote liquide connecté à une ligne de vide et purgé plusieurs fois par évacuation de l'azote. Ensuite, le tube est scellé et immergé dans de l'azote liquide puis est placé dans un agitateur et chauffé à 75°C pendant 12 heures. Après réaction, le tube est refroidi à l'azote liquide, est ouvert et le produit obtenu est précipité dans de l'acétone à froid puis séché.

Les conditions opératoires des essais mis en oeuvre sont répertoriées dans le tableau ci-dessous :

| N° Essai | TBPPi (mg) | FAVE-8 (g) | PFVES (g) | % mol PFVES (dans le réacteur) | Acétonitrile (mL) |
|---|---|---|---|---|---|
| 1 | 17,2 | 2,0 | 0,2 | 10 | 5 |
| 2 | 19,3 | 2,0 | 0,5 | 20 | 4 |
| 3 | 22,1 | 2,0 | 0,8 | 30 | 5 |
| 4 | 25,8 | 2,0 | 1,2 | 40 | 3 |
| 5 | 28,1 | 2,0 | 1,5 | 45 | 5 |
| 6 | 34 | 2,2 | 2,0 | 50 | 6 |
| 7 | 30,9 | 1,8 | 2,0 | 55 | 5 |
| 8 | 28,4 | 1,5 | 2,0 | 60 | 7 |
| 9 | 26,1 | 1,2 | 2,0 | 65 | 5 |
| 10 | 24,3 | 0,9 | 2,0 | 70 | 4 |
| 11 | 21,2 | 0,5 | 2,0 | 80 | 5 |
| 12 | 18,9 | 0,2 | 2,0 | 90 | 6 |

Le schéma réactionnel peut être le suivant :

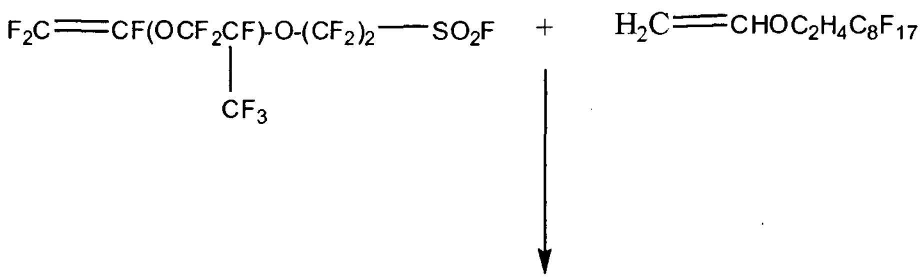

Copolymère comprenant un motif répétitif de formule suivante:

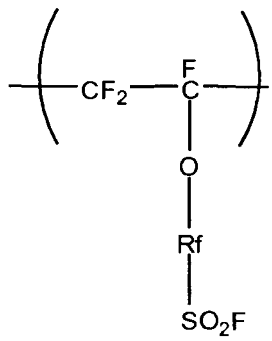

$$Rf{=}CF_2CF(CF_3)OC_2F_4$$

et un motif répétitif de formule suivante:

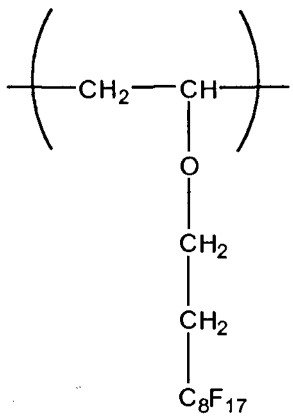

Les copolymères obtenus sont analysés par spectroscopie RMN du fluor ($^{19}F$ RMN), les résultats de cette analyse étant regroupés dans le tableau ci-dessous.

| Déplacement chimique (en ppm) | Partie chimique associée | Intégrale associée au pic de déplacement chimique |
|---|---|---|
| 45 | $-SO_2F$ | $I_{+45}$ |
| -77 to -80 | $-OC\underline{F_2}CF\ (C\underline{F_3})\ OC\underline{F_2}CF_2So_2F$ | $I_{-77}$ |
| -82 | $-(CF_2)_7-C\underline{F_3}$ | $I_{-82}$ |
| -112 | $-OCF_2CF(CF_3)OCF_2C\underline{F_2}SO_2F$ | $I_{-112}$ |
| -114 | $-C\underline{F_2}-(CF_2)_6-CF_3$ | $I_{-114}$ |

(suite)

| Déplacement chimique (en ppm) | Partie chimique associée | Intégrale associée au pic de déplacement chimique |
|---|---|---|
| -122 | $-CF_2CF(OR_fSO_2F)$ | $I_{-122}$ |
| -122 à -127 | $-CF_2-(CF_2)_6-CF_3$ | $I_{-127}$ |
| -125 | $-CF_2CF(OR_FSO_2F)$ | $I_{-125}$ |
| -144 | $-OCF_2CF(CF_3)OCF_2CF_2SO_2F$ | $I_{-144}$ |

Les atomes de fluor soulignés sont ceux correspondant aux déplacements chimiques.

Ainsi, il ressort de ce tableau les pics caractéristiques centrés sur la valeur +45 ppm attribuables à la fonction fluorure de sulfonyle de l'unité PFVES. D'autres signaux attestent de la présence d'une unité PFVES, en l'occurrence les signaux allant de -77 à -80 ppm, -112 ppm et -144 ppm attribuables respectivement aux atomes de fluor présents respectivement dans les groupes suivants : $-OCF_2CF(CF_3)OCF_2CF_2SO_2F$, $-OCF_2CF_2SO_2F$ et $-OCF_2CF(CF_3)OCF_2CF_2SO_2F$. En outre, les signaux centrés sur -82 et -114 ppm et situés dans la zone s'échelonnant de -122 à -127 ppm correspondent aux différents atomes de fluor des unités FAVE-8, respectivement $-(CF_2)_7-CF_3$, $-CF_2-(CF_2)_6-CF_3$, $-CF_2-(CF_2)_6-CF_3$.

La quantité d'unités monomères introduites dans les copolymères a été évaluée en utilisant les formules suivantes, sur la base des spectres RMN du fluor :

% mol d'unités issues du PFVES= $(I_A/I_A+I_B)$ *100 (formule 1a)
% mol d'unités issues du FAVE-8 = $(I_B/I_B+I_A)$*100 (formule 1b)
avec

$$I_A= (I_{+45} + I_{-77} + I_{-112} + I_{-144})/11$$

$$I_B= (I_{-82}+I_{-114}+I_{-127})/17$$

Pour des compositions molaires de PFSVE dans le réacteur de respectivement 10, 20, 30, 40, 45, 50, 55, 60, 70, 80 et 90% molaire, on obtient des copolymères comportant un % molaire d'unités issues de PFVES de respectivement 25, 30, 40, 50, 50, 50, 50, 50, 60, 70 et 75.

Il a été observé que pour des teneurs initiales de PFVES dans le réacteur allant de 40 à 65% molaire, les copolymères résultants présentent une alternance de motifs issus de PFVES et de FAVE-8.

Pour les essais susmentionnés, il a été procédé à la mesure de la température de transition vitreuse (Tg) et à la mesure de la température de dégradation ($Td_{10}$) (sous oxygène) (à savoir la température à partir de laquelle 10% en masse du copolymère se dégrade) obtenus respectivement par calorimétrie différentielle à balayage (DSC) et par analyse thermogravimétrique (TGA).

Les résultats figurent dans le tableau ci-dessous.

| % d'unités PFVES dans le copolymère (%mol) | Tg (°C) | $Td_{10}$ (°C) (sous oxygène) |
|---|---|---|
| 25 | -26 | 267 |
| 30 | -20 | 320 |
| 40 | -20 | 375 |
| 50 | -20 | 420 |
| 50 | -20 | 420 |
| 50 | -20 | 420 |
| 50 | -20 | 420 |
| 50 | -20 | 420 |
| 60 | -22 | 280 |

(suite)

| % d'unités PFVES dans le copolymère (%mol) | Tg (°C) | $Td_{10}$ (°C) (sous oxygène) |
|---|---|---|
| 70 | -24 | 255 |
| 75 | -28 | 243 |

Il découle que les copolymères obtenus présentent des températures de transition très basses, notamment lorsque la teneur en unités PFVES est très élevée (notamment Tg=-28°C pour une teneur de 75%).

Ceci pourrait être attribué à la présence de groupes pendants comprenant 2 atomes d'oxygène dans les unités PFVES et seulement un dans les unités FAVE-8.

Il découle des valeurs de $Td_{10}$ très élevées, ce qui rend ces copolymères intéressants en vue d'être utilisés dans des piles à combustibles, en particulier pour des valeurs de % d'unités PFVES allant de 40 à 50% où $Td_{10}$ est égal à 420°C.

## EXEMPLE 2

Cet exemple illustre la préparation d'un copolymère dont la fonction chlorure de sulfonyle est hydrolysée en fonction sulfonate à partir d'un copolymère préparé selon l'exemple 1 (Essai pour lequel le copolymère obtenu comprend 25% en mole d'unités issues du PFVES).

2 g de copolymère sont placés dans un bécher de 50 mL et agités avec 30 mL de 1,1,1,3,3-pentafluorobutane. A cette solution, on ajoute 20 mL d'une solution comprenant du $Li_2CO_3$ (2,5 éq.) dans du méthanol (0,5 $mol.L^{-1}$) au goutte à goutte.

Après addition, la solution est agitée à température ambiante pendant 12 heures.

Ensuite, la solution est filtrée et les solvants sont éliminés. Le résidu est séché à température ambiante sous 20 mm de Hg pendant 48 heures.

Le copolymère obtenu est analysé par spectroscopie RMN $^{19}F$. Les déplacements chimiques observés attestent de la transformation du chlorure de sulfonyle en groupe sulfonique, lesquels sont les suivants :

- un déplacement du multiplet de -112 ppm à -118,5 ppm affecté au groupe difluorométhylène adjacent au groupe sulfonate ($SO_3Li$), les autres déplacements demeurant inchangés ;
- l'absence de pic à +45,3 ppm, caractéristique d'un groupe fluorure de sulfonyle attestant ainsi de la réaction quantitative d'hydrolyse.

Le copolymère a également été analysé par spectroscopie IR, laquelle démontre la présence de pics à 3500 et 1050 $cm^{-1}$ attribuables aux vibrations d'élongation de la fonction acide sulfonique. Les fréquences d'absorption centrées sur 1460-1470 $cm^{-1}$ et 810-820 $cm^{-1}$ caractéristiques des vibrations du groupe chlorure de sulfonyle ont disparu.

## Revendications

1. Copolymère fluoré comprenant au moins un motif répétitif de formule (I) suivante :

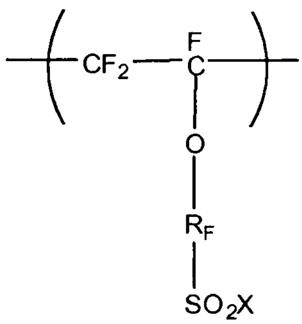

(I)

et au moins un motif répétitif de formule (II) suivante :

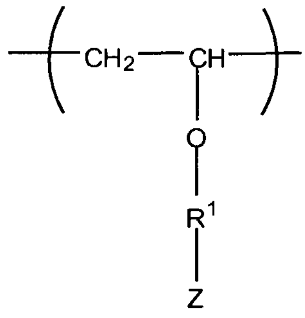

(II)

dans lesquelles :

- $R_F$ représente une chaîne perfluorocarbonée comprenant éventuellement un ou plusieurs atomes d'oxygène ;
- X représente un atome d'halogène ou un groupe OR avec R représentant un atome d'hydrogène ou un cation ;
- $R^1$ représente une chaîne hydrocarbonée ou une chaîne perfluorocarbonée ;
- Z représente une chaîne perfluorocarbonée.

**2.** Copolymère selon la revendication 1, dans lequel $R_F$ est un groupe perfluorocarboné comprenant de 1 à 12 atomes de carbone et comprenant de 1 à 5 atomes d'oxygène.

**3.** Copolymère selon la revendication 1 ou 2, dans lequel Z est un groupe perfluocarboné comprenant de 1 à 12 atomes de carbone.

**4.** Copolymère selon l'une quelconque des revendications précédentes, dans lequel $R^1$ est un groupe alkylène comprenant de 1 à 5 atomes de carbone.

**5.** Copolymère selon l'une quelconque des revendications précédentes, dans lequel X est un atome de fluor ou un groupe -OH.

**6.** Copolymère selon l'une quelconque des revendications précédentes, comprenant comme motif répétitif conforme à la formule (I) un motif répétitif de formule (Ia) suivante :

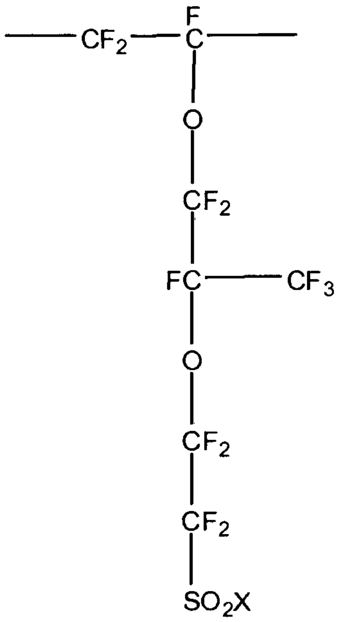

(Ia)

avec X ayant la même définition que celle donnée à la revendication 1 et comme motif répétitif conforme à la formule (II) un motif répétitif de formule (IIa) suivante :

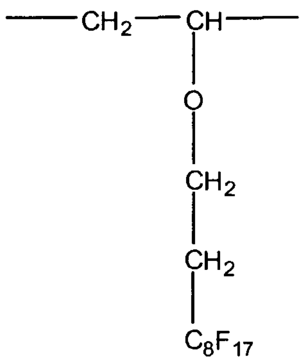

(IIa)

7. Procédé de préparation d'un copolymère tel que défini selon la revendication 1 comprenant une étape de polymérisation en présence d'un amorceur de radicaux libres d'au moins un monomère de formule (III) suivante :

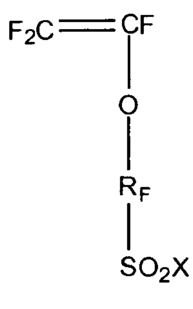

(III)

et d'au moins un monomère de formule (IV) suivante :

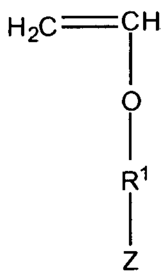

(IV)

les $R_F$, X, Z et $R^1$ étant tels que définis à la revendication 1.

**8.** Membrane comprenant au moins un copolymère tel que défini selon l'une quelconque des revendications 1 à 6.

**9.** Dispositif de pile à combustible comprenant au moins une membrane telle que définie selon la revendication 8.

**Patentansprüche**

**1.** Fluoriertes Copolymer, enthaltend zumindest eine wiederkehrende Einheit der nachfolgenden Formel (I):

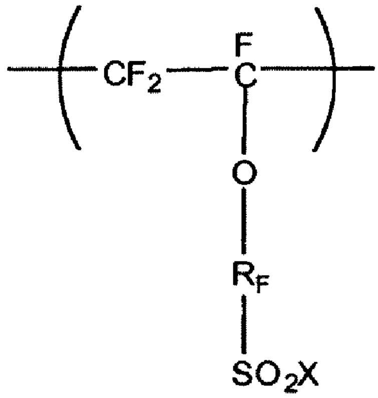

(I)

und zumindest eine wiederkehrende Einheit der nachfolgenden Formel (II):

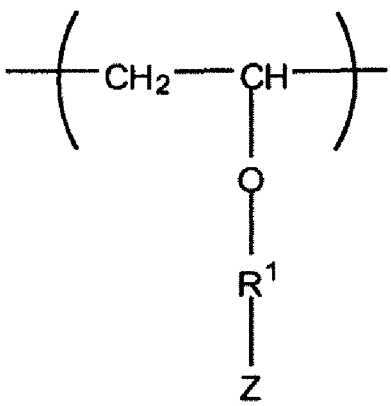

(II)

worin:

- $R_F$ eine Perfluorkohlenstoffkette gegebenenfalls mit einem oder mehreren Sauerstoffatomen darstellt;
- X ein Halogenatom oder eine OR-Gruppe darstellt, wobei R ein Wasserstoffatom oder ein Kation darstellt;
- $R^1$ eine Wasserkohlenstoffkette oder eine Perfluorkohlenstoffkette darstellt;
- Z eine Perfluorkohlenstoffkette darstellt.

**2.** Copolymer nach Anspruch 1, wobei $R_F$ eine Perfluorkohlenstoffgruppe mit 1 bis 12 Kohlenstoffatomen und mit 1 bis 5 Sauerstoffatomen ist.

**3.** Copolymer nach Anspruch 1 oder 2, wobei Z eine Perfluorkohlenstoffgruppe mit 1 bis 12 Kohlenstoffatomen ist.

**4.** Copolymer nach einem der vorangehenden Ansprüche, wobei $R^1$ eine Alkylengruppe mit 1 bis 5 Kohlenstoffatomen ist.

**5.** Copolymer nach einem der vorangehenden Ansprüche, wobei X ein Fluoratom oder eine -OH-Gruppe ist.

**6.** Copolymer nach einem der vorangehenden Ansprüche, enthaltend als wiederkehrende Einheit nach Form (I) eine wiederkehrende Einheit der nachfolgenden Formel (Ia):

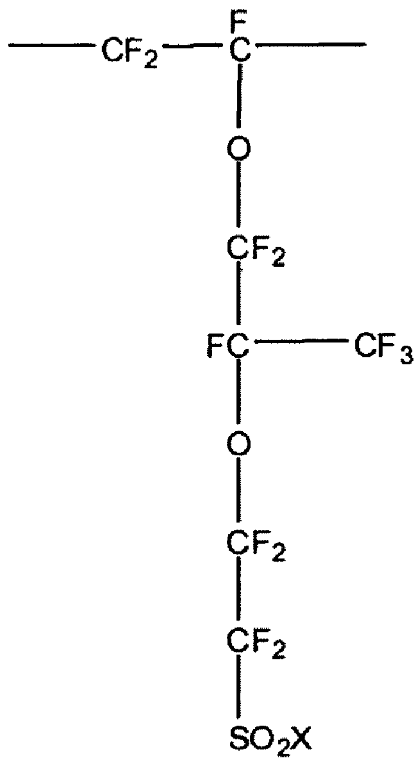

(Ia)

worin X die gleiche Definition wie in Anspruch 1 angegeben hat und als wiederkehrende Einheit gemäß Formel (II) eine wiederkehrende Einheit der nachfolgenden Formel (IIa) hat:

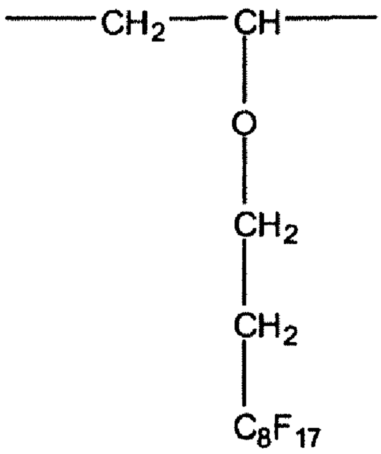

(IIa)

7. Verfahren zum Herstellen eines Copolymers wie gemäß Anspruch 1 definiert, enthaltend einen Schritt der Polymerisation unter Vorhandensein eines freie Radiale erzeugenden Initiators zumindest eines Monomers der nachfolgenden Formel (III):

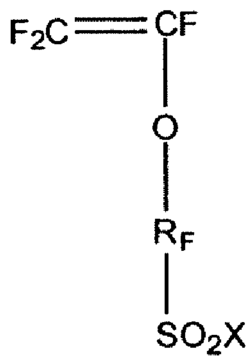

(III)

und zumindest eines Monomers der nachfolgenden Formel (IV):

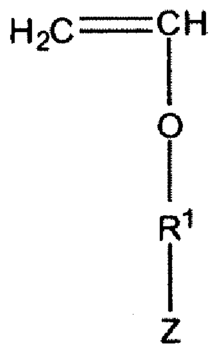

(IV)

wobei $R_F$, X, Z und $R^1$ wie in Anspruch 1 definiert sind.

8. Membran, enthaltend zumindest ein Copolymer wie nach einem der Ansprüche 1 bis 6 definiert.

**9.** Brennstoffzellenvorrichtung, enthaltend zumindest eine Membran wie nach Anspruch 8 definiert.

**Claims**

**1.** A fluorinated copolymer comprising at least one recurrent unit of the following formula (I):

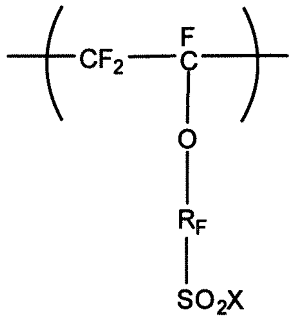

(I)

and at least one recurrent unit of the following formula (II):

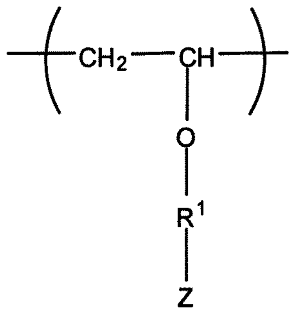

(II)

wherein:

- $R_F$ represents a perfluorocarbon chain optionally comprising one or more oxygen atoms;
- X represents a halogen atom or an OR group with R representing a hydrogen atom or a cation;
- $R^1$ represents a hydrocarbon chain or a perfluorocarbon chain;
- Z represents a perfluorocarbon chain.

**2.** The copolymer according to claim 1, wherein $R_F$ is a perfluorocarbon group comprising from 1 to 12 carbon atoms and comprising from 1 to 5 oxygen atoms.

**3.** The copolymer according to claim 1 or 2, wherein Z is a perfluorocarbon group comprising from 1 to 12 carbon atoms.

**4.** The copolymer according to any of the preceding claims, wherein $R^1$ is an alkylene group comprising from 1 to 5 carbon atoms.

**5.** The copolymer according to any of the preceding claims, wherein X is a fluorine atom or an -OH group.

**6.** The copolymer according to any other preceding claims, comprising as a recurrent unit compliant with formula (I), a recurrent unit of the following formula (Ia):

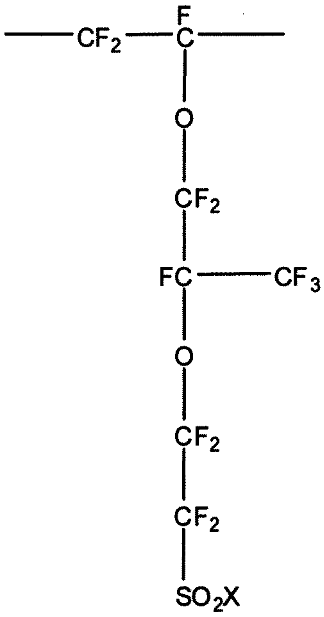

(Ia)

with X having the same definition as the one given in claim 1 and as a recurrent unit compliant with formula (II), a recurrent unit of the following formula (IIa):

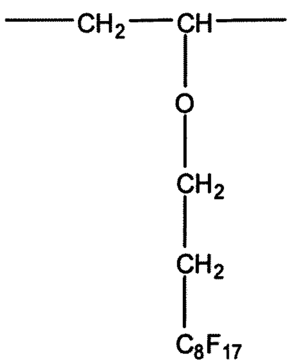

(IIa)

7. A method for preparing a copolymer as defined according to claim 1, comprising a polymerization step in the presence of a free radical initiator, of at least one monomer of the following formula (III):

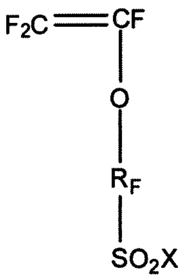

(III)

and of at least one monomer of the following formula (IV):

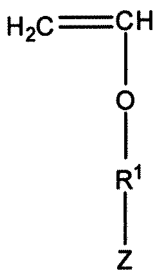

(IV)

$R_F$, X, Z and $R^1$ being as defined in claim 1.

**8.** A membrane comprising at least one copolymer as defined according to any of claims 1 to 6.

**9.** A fuel cell device comprising at least one membrane as defined according to claim 8.